# EUROPÄISCHE PATENTSCHRIFT

(11) **EP 2 714 973 B1**
(45) Veröffentlichungstag und Bekanntmachung des Hinweises auf die Patenterteilung: **13.01.2016**
(21) Anmeldenummer: 12726404.2
(22) Anmeldetag: 01.06.2012
(51) Int. Cl.: D02G 3/44

(54) **VERFAHREN UND VORRICHTUNG ZUR HERSTELLUNG VON SYNTHETISCHEN GRASFASERN**
METHOD AND DEVICE FOR PRODUCING SYNTHETIC GRASS FIBERS
PROCÉDÉ ET DISPOSITIF DE FABRICATION DE FIBRES HERBEUSES SYNTHÉTIQUES

(30) Priorität: 03.06.2011 DE 102011103296
(43) Veröffentlichungstag der Anmeldung: 09.04.2014
(73) Patentinhaber: Oerlikon Textile GmbH & Co. KG, 42897 Remscheid (DE)
(72) Erfinder: WEINHOLD, Jens, 09117 Chemnitz (DE); HUSFELDT, Steffen, 09243 Niederfrohna (DE)
(74) Vertreter: Neumann, Ditmar
(86) Internationale Anmeldenummer: PCT/EP2012/060337
(87) Internationale Veröffentlichungsnummer: WO 2012/164059

(56) Entgegenhaltungen:
- EP-A1- 0 263 566
- EP-A1- 1 867 680
- WO-A1-2006/066777
- DE-A1-102004 013 749
- DE-A1-102009 015 557
- US-A- 3 551 263
- US-A- 3 573 147
- US-A- 5 345 713

## Beschreibung

Die Erfindung betrifft ein Verfahren zur Herstellung von synthetischen Grasfasern für Kunstrasen gemäß dem Oberbegriff des Anspruchs 1 sowie eine Vorrichtung zur Herstellung von synthetischen Grasfasern gemäß dem Oberbegriff des Anspruchs 5.

Ein gattungsgemäßes Verfahren und eine gattungsgemäße Vorrichtung sind beispielsweise aus der DE 10 2009 037 740 A1 bekannt.

Die Herstellung der synthetischen Grasfasern erfolgt in einem einstufigen Extrusionsprozess, wobei die Fasern aus einer Vielzahl einzelner Bänder, die aus einer extrudierten Folie geschnitten sind, oder aus einer Vielzahl durch einen Spinnkopf extrudierte Monofilamente gebildet werden. Nach der Extrusion werden die Bänder oder Monofilamente üblicherweise verstreckt und einzeln oder in Gruppen zu Spulen aufgewickelt. Um neben den visuellen Eigenschaften der Fasern, die üblicherweise durch eine Grüneinfärbung der Fasern bestimmt ist, auch physische Eigenschaften der Fasern zu beeinflussen, werden bevorzugt vor dem Aufwickeln der Grasfasern zusätzliche Behandlungsstufen eingeführt. Hierbei wird versucht den natürlichen Gräsern nachempfundenen typischen Eigenschaften zu erhalten. Bei dem bekannten Verfahren und der bekannten Vorrichtung wird hierzu eine Fibrillierung an den Grasfasern ausgeführt, um eine faserige Struktur zu erhalten. Die Gesamtstruktur der Faser lässt sich dabei noch durch eine Kräuselung verändern.

Neben dem visuellen Erscheinungsbild der Grasfasern, das insbesondere das Aussehen eines aus den Grasfasern gebildeten Kunstrasen bestimmt, versucht man auch die für natürliche Gräser typischen Eigenschaften wie beispielsweise das Reibverhalten oder das Benetzungsverhalten gegenüber Wasser zu beeinflussen.

So ist aus der EP 0 259 940 B1 ein Verfahren bekannt, um eine Grasfaser mit möglichst geringen Reibungskoeffizienten an den Oberflächen herzustellen. Hierzu werden zusätzliche Materialien vor dem Extrudieren eines Polymers dem Polymer beigemengt, so dass sich insgesamt die Eigenschaften des Polymers verändern. Derartige Verfahren besitzen somit den Nachteil, dass die Eigenschaften des Basismaterials sich aufgrund der Zugaben eines zusätzlichen Stoffes insgesamt verändern.

Demgegenüber ist aus der WO 99/40246 A1 ein Verfahren zur Herstellung einer Grasfaser bekannt, bei welcher an einer Faser partiell eine Oberflächenbeschichtung aufgetragen wird, so dass sich an der Faser unterschiedliche Zonen mit und ohne Beschichtungen bilden. Damit lassen sich jedoch nur ungleichförmige Oberflächeneigenschaften an der Faser erzeugen, die beispielsweise das Benetzungsverhalten der Faser ungleichmäßig je nach Oberflächenbeschaffenheit beeinflusst. Außerdem lassen sich partielle Beschichtungen nur in nicht reproduzierbaren Mustern an der Oberfläche der Faser herstellen, so dass jede der Fasern innerhalb des Kunstrasens eine von dem Muster der partiellen Beschichtung abhängende Oberflächeneigenschaft aufweist.

Aus der DE 10 2009 015 557 A1 ist beispielsweise eine Vorrichtung zur Herstellung von Monofile oder Bändchen mit einer Extrusionseinrichtung und mehreren Behandlungseinrichtungen bekannt. Die durch die Extrusionseinrichtung extrudierten Monofile werden durch die Behandlungseinrichtungen verstreckt und als Faserbündel aufgespult.

Zudem ist aus der DE 10 2004 013 749 A1 ein Verfahren zur Herstellung eines Garns für einen Kunstrasen bekannt. Dieses Garn kann eine makroskopisch strukturierte Oberfläche aufweisen, um eine Glattheit des Garns zu reduzieren. Weiterhin kann durch unterschiedliche Behandlungsverfahren eine hydrophobe Eigenschaft der Oberfläche des Garns reduziert werden.

Weiterhin offenbart die EP 1 867 680 A1 eine Folie, dessen Harzzusammensetzung ein aliphatisches Polyesterharz enthält, um unter anderem dessen Hydrolysebeständigkeit zu erhöhen. Die Folie kann zudem einer Plasmabehandlung unterzogen werden, um eine Bedruckbarkeit, Laminierbarkeit oder Beschichtbarkeit zu verbessern.

Es ist nun Aufgabe der Erfindung, das gattungsgemäße Verfahren zur Herstellung von synthetischen Grasfasern und die gattungsgemäße Vorrichtung zur Herstellung von synthetischen Grasfasern derart weiterzubilden, dass die Grasfasern neben den durch das Polymermaterial bestimmten Eigenschaften eine gleichmäßige vorbestimmte Oberflächenstruktur aufweisen.

Ein weiteres Ziel der Erfindung liegt darin, das bekannte Verfahren und die bekannte Vorrichtung zur Herstellung von synthetischen Grasfasern derart zu verbessern, dass neben den visuellen Eigenschaften auch die für natürliche Gräser typischen physischen Eigenschaften reproduzierbar hergestellt werden können.

Eine weitere Aufgabe der Erfindung liegt darin, ein Verfahren und eine Vorrichtung zur Herstellung von synthetischen Grasfasern bereitzustellen, die hydrophile Oberflächen zur verbesserten Wasseraufnahme aufweisen.

Die Aufgabe der Erfindung wird für das Verfahren dadurch gelöst, dass die Oberfläche der Bänder oder Monofilamente vor oder nach dem Aufwickeln in ihrer Rauigkeit geändert werden, wobei die Rauigkeit der Oberflächen der Bänder oder Monofilamente durch eine Beschichtung und/oder eine Materialumwandlung geändert wird und wobei die Beschichtung und/oder die Materialumwandlung an den Oberflächen der Bänder oder Monofilamenten durch eine Plasmabehandlung erzeugt wird.

Die erfindungsgemäße Vorrichtung löst die Aufgabe dadurch, dass eine Behandlungseinrichtung vorgesehen ist, die Mittel zur Änderung der Oberflächenrauigkeit der Bänder oder Monofilamente aufweist, wobei die Mittel der Behandlungseinrichtung zumindest eine Hochvolt-Elektrode und ein Gasgemisch aufweisen, durch welche eine Plasmabehandlung an den Oberflächen der Bänder oder Monofilamente ausführbar ist.

Vorteilhafte Weiterbildungen der Erfindung sind durch die Merkmale und Merkmalskombinationen der Unteransprüche definiert.

Die Erfindung besitzt den besonderen Vorteil, dass ausschließlich die nach dem Extrudieren und Abkühlen sich einstellenden Oberflächen der Bänder oder Monofilamente geändert werden können, ohne die visuellen Eigenschaften der Bänder oder Monofilamente zu beeinflussen. So wurde festgestellt, dass die Oberflächenrauigkeit der Bänder oder Monofilamente wesentlich das Verhalten eines Kunstrasens bei einer Bewässerung und das Verhalten eines Kunstrasens beim Gleiten von Sportgeräten wie beispielsweise einem Fußball oder beim Gleiten gegenüber gestürzten Spielerpersonen beeinflusst. Insoweit unterliegt die Oberflächenrauigkeit von synthetischen Grasfasern besondere Anforderungen, die in der Regel durch das Extrudieren synthetischen Fasern mit den herkömmlichen Extrusionswerkzeugen nicht erreicht werden. Daher ist die Erfindung besonders vorteilhaft, um eine auf den speziellen Anwendungsfall abgestimmte Oberflächenrauigkeit an den Bändern oder Monofilamente erzeugen zu können.

Bei einer Beschichtung können hierbei zusätzliche Materialkomponenten beispielsweise Nanopartikel verwendet werden, um eine vorbestimmte Struktur der Rauigkeit an der Oberfläche zu erhalten. Die Änderung der Rauigkeit kann hier grundsätzlich im Mittel zur höheren oder niedrigeren Rauigkeitswerten führen.

Bei einer Materialumwandlung wird bevorzugt die Molekularstruktur des Basispolymers mit einbezogen, um eine Oberflächenveränderung der Rauigkeit zu erhalten.

Um an kontinuierlich geführten Bändern und Monofilamente eine Beschichtung oder Materialumwandlung auch bei höheren Geschwindigkeiten von mehr als 100 m/min. ausführen zu können, wird die Beschichtung und/oder die Materialumwandlung an der Oberfläche der Bänder oder Monofilamente durch eine Plasmabehandlung erzeugt.

Die Plasmabehandlung der Oberflächen der Bänder erfolgt dabei vorteilhaft nach dem Verstrecken und vor dem Aufwickeln der Bänder, so dass die hergestellten Bänder oder Monofilamente eine für die Weiterverarbeitung zu einem Kunstrasen fertige Oberflächenstruktur aufweisen.

Da natürliche Gräser oftmals eine unterschiedliche Oberseite und Unterseite aufweisen, ist die Weiterbildung der Erfindung besonders vorteilhaft, bei welcher die Oberflächen an einer Unterseite der Bänder oder Monofilmente und die Oberflächen an einer Oberseite der Bänder oder Monofilamente nacheinander in zwei Schritten behandelt werden. Somit lassen sich die Unterseite der Bänder und die Oberseite der Bänder mit unterschiedlichen oder gleichen Oberflächenrauigkeit herstellen.

Für die Herstellung von synthetischen Grasfasern haben sich dabei besonders die Bänder oder Monofilamente aus dem Polymermaterial Polyethylen oder dessen Varianten ULDPE, MLDPE, LLDPE oder HDPE bewährt. Aber auch Bänder aus anderen Polymermaterialien wie beispielsweise Polypropylen, Polyester oder Polyamid lassen sich vorteilhaft mit dem erfindungsgemäßen Verfahren herstellen.

Die erfindungsgemäße Vorrichtung zeichnet sich besonders dadurch aus, dass die für die Grasfasern gewünschten Oberflächen individuell an den dazu erzeugten Bändern oder Monofilamenten hergestellt werden können. Hierzu ist eine Behandlungseinrichtung vorgesehen, die Mittel zur Änderung der Oberflächenrauigkeit der Bänder oder Monofilamente aufweist, wobei die Mittel der Behandlungseinrichtung zumindest eine Hochvolt-Elektrode und ein Gasgemisch aufweisen, durch welche eine Plasmabehandlung an den Oberflächen der Bänder oder Monofilamente ausführbar ist. So lassen sich beispielsweise die hydrophob wirkenden Oberflächen nach dem Extrudieren und Verstrecken der Bänder in eine hydrophile Oberfläche umwandeln. Derartige hydrophile Oberflächen der Grasfaser sind besonders vorteilhaft, um eine durchgehende Benetzung bei der Bewässerung von Kunstrasen zu erhalten. Eine durchgehende Benetzbarkeit der Grasfasern ist zudem vorteilhaft, um bei extremen Gleitreibungsvorgängen wie beispielsweise bei einem Sturz einer Spielerperson keine Überhitzung an der Faser zu erzeugen. Bei Hautkontakt mit einer Spielperson lassen sich somit vorteilhaft Verbrennungen vermeiden. Zudem kann somit eine Erwärmung des Kunstrasens vorteilhaft vermieden bzw. vermindert werden.

Um die beim Extrudieren üblichen Prozessgeschwindigkeiten einhalten zu können, weisen die Mittel der Behandlungsleinrichtung zumindest eine Hochvoltelektrode und ein Gasgemisch auf, durch welche eine Plasmabehandlung an der Oberfläche der Bänder oder Monofilamente ausführbar ist.

Die erfindungsgemäße Vorrichtung wird bevorzugt für die Onlineherstellung derartiger Grasfasern verwendet, so dass die Behandlungseinrichtung zwischen der Verstreckeinrichtung und der Aufwickeleinrichtung angeordnet ist.

Die Behandlung der extrudierten Bänder oder Monofilamente erfolgt dabei bevorzugt auf der Oberseite und der Unterseite getrennt voneinander, so dass die Weiterbildung der erfindungsgemäßen Vorrichtung bevorzugt eingesetzt wird, bei welcher die Behandlungseinrichtung zumindest zwei Stationen aufweist, durch welche eine Unterseite der Bänder oder Monofilamente und eine Oberseite der Bänder oder Monofilmaente separat behandelbar sind. Die Behandlungsstationen der Behandlungseinrichtungen können mit identischen Mitteln zur Oberflächenrauigkeitsveränderung oder mit unterschiedlichen Mitteln zur Änderung der Oberflächenrauigkeit ausgebildet sein. Daher sind typische den natürlichen Gräsern nachempfundene Oberflächenbeschaffenheiten an der Oberseite und Unterseite getrennt herstellbar.

Das erfindungsgemäße Verfahren wird nachfolgend anhand einiger Ausführungsbeispiele der erfindungsgemäßen Vorrichtung unter Bezugnahme der beigefügten Figuren näher erläutert.

Es stellen dar:
- Fig. 1: schematisch eine Seitenansicht eine Ausführungsbeispiels der erfindungsgemäßen Vorrichtung
- Fig. 2: schematisch eine Seitenansicht eines weiteren Ausführungsbeispiels der erfindungsgemäßen Vorrichtung

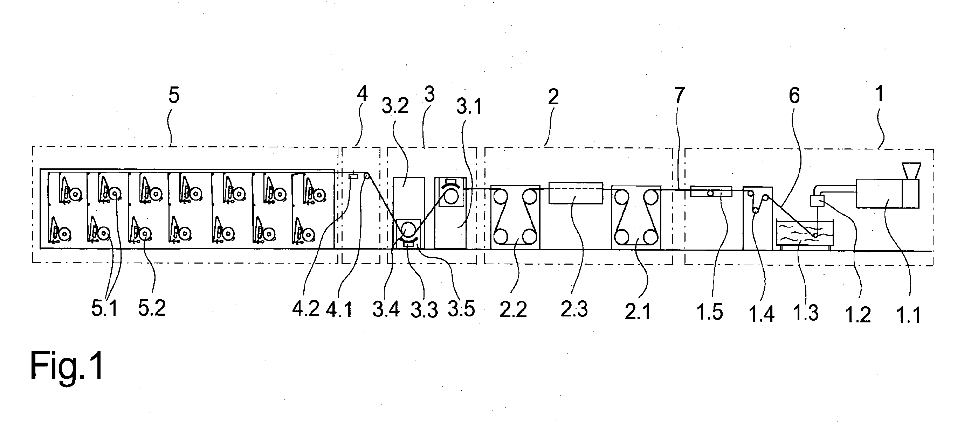

In Fig. 1 ist ein erstes Ausführungsbeispiel der erfindungsgemäßen Vorrichtung in einer Gesamtansicht schematisch dargestellt. Das Ausführungsbeispiel weist eine Extrusionseinrichtung 1, eine Verstreckeinrichtung 2, eine Behandlungseinrichtung 3, eine Separiereinrichtung 4 und eine Aufwickeleinrichtung 5 auf, die zu einem Faserlauf hintereinander angeordnet sind und in einem Einstufenprozess eine Vielzahl von Grasfasern herstellen.

Die Extrusionseinrichtung 1 ist in diesem Ausführungsbeispiel durch einen Extruder 1.1 und einen mit dem Extruder 1.1 verbundenen Extruderkopf 1.2 gebildet. Unterhalb des Extruderkopfes 1.2 ist ein Kühlbad 1.3 vorgesehen, das mit einer Kühlflüssigkeit gefüllt ist. Auf einer Auslaufseite des Kühlbades 1.3 schließt sich eine Umlenkeinrichtung 1.4 sowie eine Schneideinrichtung 1.5 an.

Innerhalb der Extrusionseinrichtung 1 wird ein Grundpolymer beispielsweise ein Polyethylen aufgeschmolzen und als Schmelze dem Extrusionskopf 1.2 unter Druck zugeführt. An dem Extrusionskopf 1.2 wird eine Flachfolie 6 extrudiert und in dem Kühlbad 1.3 abgekühlt.

Der Abzug der Folie 6 erfolgt durch die Verstreckeinrichtung 2, die ein erstes Galettenlieferwerk 2.1 und ein zweites Galettenlieferwerk 2.2 umfasst. Insoweit werden über die Galetten des ersten Galettenlieferwerkes 2.1 die Abzugskräfte zum Abziehen der Folie 6 erzeugt.

Bevor die Folie 6 der Verstreckeinrichtung 2 zugeführt wird, erfolgt über die Umlenkeinrichtung 1.4 eine Trocknung der Folie 6 und über die Schneideinrichtung 1.5 ein Zerteilen der Folie 6 in eine Vielzahl einzelner Bänder 7. Insoweit werden die Bänder 7 als eine Bänderschar gemeinsam an der Verstreckeinrichtung 2 geführt. Zwischen dem ersten Galettenlieferwerk 2.1 und dem zweiten Galettenlieferwerk 2.2 ist eine Heizeinrichtung 2.3 angeordnet, durch welche eine thermische Behandlung der Bänder 7 erfolgt. Die Galetten des zweiten Galettenlieferwerkes 2.2 werden mit einer höheren Umfangsgeschwindigkeit angetrieben gegenüber den Galetten des ersten Galettenliefwerkes 2.1, so dass die Bänder 7 verstreckt werden.

Die in Fig. 1 dargestellte Verstreckeinrichtung 2 ist beispielhaft mit nur zwei Galettenlieferwerken 2.1 und 2.2 dargestellt. Grundsätzlich können derartige Verstreckeinrichtungen 2 mehrere Streckzonen aufweisen, wobei den Verstreckzonen auch eine Schrumpfzone zugeordnet sein könnte, in welcher eine Schrumpfbehandlung zum Abbau von Spannungen an den Bändern 7 ausführbar wäre.

Zwischen der Verstreckeinrichtung 2 und der Aufwickeleinrichtung 5 ist eine Behandlungseinrichtung 3 angeordnet. Die Behandlungseinrichtung 3 weist eine erste Behandlungsstation 3.1 und eine zweite Behandlungsstation 3.2 auf. Beide Behandlungsstationen 3.1 und 3.2 enthalten Mittel zur Änderung der Oberflächenrauigkeit der Bänder 7. Dabei wird in der Behandlungsstation 3.1 eine Oberseite der Bänder 7 und in der Behandlungsstation 3.2 eine Unterseite der Bänder 7 behandelt. Die Behandlungsstationen 3.1 und 3.2 sind identisch ausgeführt und weisen als Mittel zur Oberflächenrauigkeitsveränderung der Bänder eine Plasmakammer 3.5 auf, in welcher eine Führungswalze 3.4 und eine Hochvolt-Elektrode 3.3 angeordnet sind. Insoweit lässt sich an den Oberflächen der Bänder eine Plasmabehandlung durchführen. Hierzu wird der Plasmakammer 3.5 ein Gasgemisch zugeführt, das auf einen Arbeitsdruck und eine Arbeitstemperatur eingestellt ist. Durch die Hochvolt-Elektrode wird eine Energie erzeugt, um die gewünschte Reaktion im Gasgemisch und an der Oberfläche der Bänder auszulösen. Insbesondere hat sich hierbei das Prinzip der Atmosphärendruck-Plasmaentladung unter kontrollierter Gasatmosphäre bewährt.

Um innerhalb der Aufwickeleinrichtung 5 die Bänder 7 zu Spulen zu wickeln, ist zwischen der Behandlungseinrichtung 3 und der Aufwickeleinrichtung 5 eine Separierungseinrichtung 4 vorgesehen, durch welche die Bänder 7 vereinzelt oder zu mehreren einer Mehrzahl von Aufspulstationen 5.1 der Aufwickeleinrichtung 5 zugeführt werden. Die Separiereinrichtung 4 weist hierzu eine Umlenkwalze 4.1 und eine Führungsleiste 4.2 auf.

Innerhalb der Aufwickeleinrichtung 5 sind die Aufspulstationen 5.1 in zwei Etagen übereinander angeordnet, wobei in jeder Aufspulstation 5.1 einer der Bänder 7 oder eine Gruppe von Bändern 7 zu einer Spule 5.2 aufgewickelt werden.

Das in Fig. 1 dargestellte Ausführungsbeispiel der erfindungsgemäßen Vorrichtung ist somit besonders geeignet, um das erfindungsgemäße Verfahren zur Herstellung von synthetischen Grasfasern für Kunstrasen in einem Einstufenprozess herzustellen. Als Polymermaterial wird hierbei bevorzugt ein Polyethylen vom Typ ULDPE, MLDPE, LLDPE oder HDDPE verwendet. Die separate Behandlung der Unterseiten und der Oberseiten der Bänder ermöglicht damit eine individuelle Behandlung und Herstellung der Oberflächenrauigkeiten der Bänder, um die Oberflächeneigenschaften der natürlichen Gräser durch spezielle Rauigkeiten zu erhalten.

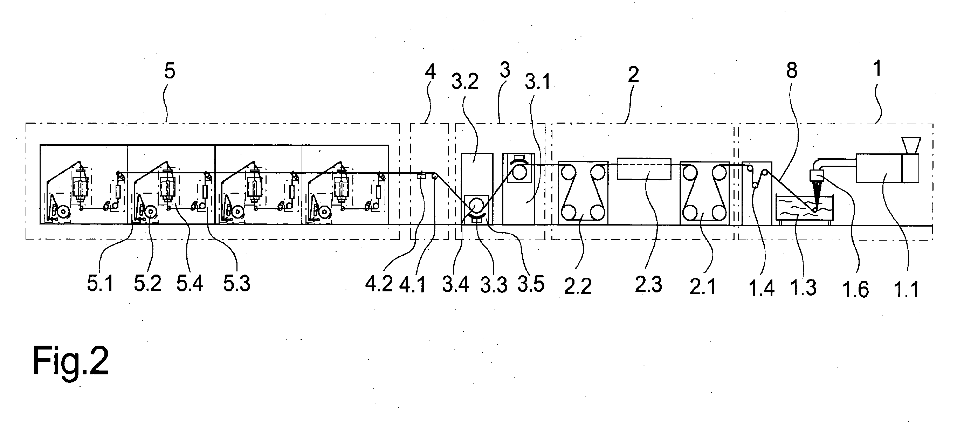

In Fig. 2 ist schematisch ein weiteres Ausführungsbeispiel der erfindungsgemäßen Vorrichtung zur Herstellung von synthetischen Grasfasern dargestellt. Der Aufbau und die Funktion des Ausführungsbeispiels ist im Wesentlichen identisch zu dem Ausführungsbeispiel nach Fig. 1, so dass an dieser Stelle zur Vermeidung von Wiederholungen nur die Unterschiede erläutert werden und ansonsten zu der vorgenannten Beschreibung Bezug genommen wird.

Bei dem in Fig. 2 dargestellten Ausführungsbeispiel ist eine Extrusionseinrichtung 1, eine Verstreckeinrichtung 2, eine Behandlungseinrichtung 3, eine Separiereinrichtung 4 und eine Aufwickeleinrichtung 5 zu einem Fadenlauf hintereinander angeordnet. Die Verstreckeinrichtung 2, die Behandlungsleinrichtung 3 und die Separiereinrichtung 4 sind identisch zu dem vorgenannten Ausführungsbeispiel nach Fig. 1 ausgebildet, so dass zu der vorgenannten Beschreibung Bezug genommen wird.

Bei der Extrusionseinrichtung 1 ist der Extruder 1.1 mit einem Spinnkopf 1.6 verbunden. Dem Spinnkopf 1.6 ist an der Unterseite ein Kühlbad 1.3 zugeordnet. Der Spinnkopf 1.6 weist an seiner Unterseite eine Vielzahl von Düsenöffnungen auf, durch welche jeweils ein Monofilament 8 extrudiert wird. Insoweit wird über den Spinnkopf 1.6 aus der durch den Extruder 1.1 erzeugten Polymerschmelze eine Vielzahl von Monofilamenten 8 extrudiert und dem Kühlbad 1.3 zugeführt. Die Monofilamente 8 werden als eine Fadenschar über die Umlenkeinrichtung 1.4 durch die Verstreckeinrichtung 2 abgezogen. An der Umlenkeinrichtung 1.4 werden die Monofilamente 8 getrocknet. Die Umlenkeinrichtung 1.4 weist hierzu zumindest ein hier nicht näher dargestelltes Saugmittel zur Abfuhr der Flüssigkeitsreste auf.

Nach dem Verstrecken und beidseitigen Behandeln der Monofilamente 8 erfolgt über die Separiereinrichtung 4 eine Aufteilung der Monofilamente 8 in mehreren Gruppen, wobei jede Gruppe 4 bis 8 Monofilamente aufweist. Der Faserverbund der Monofilamente wird innerhalb der Aufwickeleinrichtung 5 in mehreren Stationen einer Weiterbehandlung zugeführt. So weist die Aufwickeleinrichtung 5 mehrere an einer Gestellwand hintereinander angeordnete Behandlungsmodule auf, die jeweils eine Kräuselstation 5.3, eine Umwindestation 5.4 und eine Aufspulstation 5.1 aufweisen. Die Kräuselstation 5.3, die Umwindestation 5.4 und die Aufspulstation 5.1 werden von dem Faserbündel der Monofilamente 8 nacheinander durchlaufen, wobei die Monofilamente 8 in der Kräuselstation 5.3 eine Kräuselung erhalten und anschließend in der Umwindestation 5.4 mit einem Verbundfaden umwunden werden. Das so entstandene Faserbündel der Monofilamente 8 wird anschließend durch die Aufspulstation 5.1 zu einer Spule 5.2 aufgewickelt.

Eine derartige Aufwickeleinrichtung ist aus der WO 2010/102921 A1 bekannt, so dass an dieser Stelle zu der genannten Druckschrift Bezug genommen wird und keine weiteren Erläuterungen gegeben werden.

Bei dem in Fig. 2 dargestellten Ausführungsbeispiel werden die Monofilamente 8 durch den Spinnkopf 1.6 mit jeweils einem bandförmigen Querschnitt extrudiert, so dass nach dem Verstrecken ebenfalls eine separate Behandlung der Oberseite und Unterseite der Monofilamente 8 durch die Behandlungsstation 3.1 und 3.2 möglich ist. Grundsätzlich besteht jedoch auch die Möglichkeit, dass die Monofilamente einen elliptischen oder kreisförmigen Querschnitt aufweisen, der in einer Behandlungsstation behandelbar ist. Insoweit könnte die in Fig. 2 dargestellte Behandlungseinrichtung 3 auch nur durch eine der Behandlungsstationen gebildet sein.

Das erfindungsgemäße Verfahren und die erfindungsgemäße Vorrichtung haben sich besonders bewährt, um die physischen Eigenschaften der herzustellenden synthetischen Grasfasern derart zu verfeinern, dass die für natürliche Gräser typischen Oberflächeneigenschaften entstehen. Insbesondere konnte die Benetzbarkeit nach der Oberflächenbehandlung der Bänder oder Monofilamente wesentlich verbessert werden. Bei üblichen extrudierten Polymeroberflächen stellen sich bei der Benetzung mit einem Wasser eine Tropfenbildung ein, die zu einem schnellen Abtropfen und Ablaufen des Wassers führt. Durch die Veränderung der Oberflächenrauigkeit wurde erreicht, dass das aufgetragene Wasser gleichmäßig über die gesamt Oberfläche verteilt und sich zu einem Film formierte, der wesentlich länger an der Oberfläche der Grasfasern haftete. Damit sind die damit hergestellten synthetischen Grasfasern vorteilhaft für Kunstrasen geeignet, die für Sportanwendungen genutzt werden.

### Bezugszeichenliste

- 1: Extrusionseinrichtung
- 1.1: Extruder
- 1.2: Extrusionskopf
- 1.3: Kühlbad
- 1.4: Umlenkeinrichtung
- 1.5: Schneideinrichtung
- 1.6: Spinnkopf
- 2: Verstreckeinrichtung
- 2.1: erstes Galettenlieferwerk
- 2.2: zweites Galettenlieferwerk
- 2.3: Heizeinrichtung
- 3: Behandlungseinrichtung
- 3.1: erste Behandlungsstation
- 3.2: zweite Behandlungsstation
- 3.3: Hochvolt-Elektrode
- 3.4: Führungswalze
- 3.5: Plasmakammer
- 4: Separierungseinrichtung
- 4.1: Umlenkwalze
- 4.2: Führungsleiste
- 5: Aufwickeleinrichtung
- 5.1: Aufspulstation
- 5.2: Spule
- 5.3: Kräuselstation
- 5.4: Umwindestation
- 6: Folie
- 7: Bänder
- 8: Monofilamente

## Patentansprüche

1. Verfahren zur Herstellung von synthetischen Grasfasern für Kunstrasen, bei welchem in einem Extrusionsprozess eine Vielzahl aus einer zerteilten Folie gebildete Bänder oder eine Vielzahl einzeln extrudierter Monofilamente aus einem Polymermaterial erzeugt wird, bei welchem die Bänder oder Monofilamente verstreckt werden und bei welchem die Bänder oder Monofilamente einzeln oder als ein Faserbündel zu Spulen aufgewickelt werden,
**dadurch gekennzeichnet, dass**
die Oberflächen der Bänder oder Monofilamente vor oder nach dem Aufwickeln in ihrer Rauigkeit geändert werden, wobei die Rauigkeit der Oberflächen der Bänder oder Monofilamente durch eine Beschichtung und/oder eine Materialumwandlung geändert wird und wobei die Beschichtung und/oder die Materialumwandlung an den Oberflächen der Bänder oder Monofilamenten durch eine Plasmabehandlung erzeugt wird.

2. Verfahren nach Anspruch 1,
**dadurch gekennzeichnet, dass**
die Plasmabehandlung der Oberflächen der Bänder oder Monofilamente nach dem Verstrecken der Bänder oder Monofilamente und vorzugsweise vor dem Aufwickeln der Bänder oder Monofilamente erfolgt.

3. Verfahren nach einem der Ansprüche 1 oder 2,
**dadurch gekennzeichnet, dass**
die Oberflächen an einer Unterseite der Bänder oder Monofilamente und die Oberflächen an einer Oberseite der Bänder oder Monofilamente nacheinander in zwei Schritten behandelt werden.

4. Verfahren nach einem der vorgenannten Ansprüche,
**dadurch gekennzeichnet, dass**
die Bänder oder Monofilamente aus dem Polymermaterial Polyethylen oder dessen Varianten ULDPE, MLDPE, LLDPE oder HDPE hergestellt werden.

5. Vorrichtung zur Herstellung von synthetischen Grasfasern für Kunstrasen mit einer Extrusionseinrichtung (1) zum Erzeugen von synthetischen Bändern (7) oder Monofilament (8), mit einer Verstreckeinrichtung (2) zum Verstrecken der Bänder (7) oder Monofilamente (8) und mit einer Aufwickeleinrichtung (5) zum Aufwickeln der Bänder (7) oder Monofilamente (8) zu einer Mehrzahl von Spulen,
**dadurch gekennzeichnet, dass**
eine Behandlungseinrichtung (3) vorgesehen ist, die Mittel (3.3, 3.4, 3.5) zur Änderung der Oberflächenrauigkeit der Bänder (7) oder Monofilamente (8) aufweist, wobei die Mittel der Behandlungseinrichtung (3) zumindest eine Hochvolt-Elektrode (3.3) und ein Gasgemisch aufweisen, durch welche eine Plasmabehandlung an den Oberflächen der Bänder (7) oder Monofilamente (8) ausführbar ist.

6. Vorrichtung nach Anspruch 5,
**dadurch gekennzeichnet, dass**
die Behandlungseinrichtung (3) zwischen der Verstreckeinrichtung (2) und der Aufwickeleinrichtung (5) angeordnet ist.

7. Vorrichtung nach einem der Ansprüche 5 oder 6,
**dadurch gekennzeichnet, dass**
die Behandlungseinrichtung (3) zumindest zwei Stationen (3.1, 3.2) aufweist, durch welche eine Unterseite der Bänder (7) oder Monofilamente (8) und eine Oberseite der Bänder (7) oder Monofilament (8) separat behandelbar sind.

## Claims

1. Method for the production of synthetic grass yarns for artificial turf, wherein a plurality of strips formed from a divided film, or a plurality of individually extruded monofilaments, is generated from a polymer material in an extrusion process, wherein the strips or the monofilaments are drawn, and wherein the strips or monofilaments are wound individually or as a fiber bundle into spools,
**characterized in that**
the roughness of the surfaces of the strips or monofilaments is modified prior to or following the winding, wherein the roughness of the surfaces of the strips or monofilaments is modified by a coating and/or a material conversion and wherein the coating and/or the material conversion on the surfaces of the strips or monofilaments is generated by a plasma treatment.

2. Method according to claim 1,
**characterized in that**
the plasma treatment of the surfaces of the strips or monofilaments is carried out after the drawing of the strips or monofilaments and preferably prior to the winding of the strips or monofilaments.

3. Method according to one of the claims 1 or 2,
**characterized in that**
the surfaces on a lower side of the strips or monofilaments and the surfaces on an upper side of the strips or monofilaments are treated one after the other in two steps.

4. Method according to one of the previous claims,
**characterized in that**
the strips or monofilaments are produced from the polymer material polyethylene, or the variants thereof ULDPE, MLDPE, LLDPE, or HDPE.

5. Device for the production of synthetic grass yarns for artificial turf, having an extrusion device (1) for the purpose of generating synthetic strips (7) or monofilaments (8), having a drawing device (2) for the purpose of drawing the strips (7) or monofilaments (8), and having a winding device (5) for the purpose of winding the strips (7) or monofilaments (8) into a plurality of spools,
**characterized in that**
a treatment device (3) is provided which has means (3.3, 3.4, 3.5) for the modification of the surface roughness of the strips (7) or monofilaments (8), wherein the means of the treatment device (3) have at least one high-voltage electrode (3.3) and a gas mix, by means of which it is possible to carry out a plasma treatment on the surfaces of the strips (7) or monofilaments (8).

6. Device according to claim 5,
**characterized in that**
the treatment device (3) is arranged between the drawing device (2) and the winding device (5).

7. Device according to one of the claims 5 or 6,
**characterized in that**
the treatment device (3) has at least two stations (3.1, 3.2) by means of which it is possible to separately treat a lower side of the strips (7) or monofilaments (8) and an upper side of the strips (7) or monofilaments (8).

## Revendications

1. Procédé de fabrication de fibres synthétiques de gazon pour pelouse synthétique, dans lequel, au cours d'une opération d'extrusion, plusieurs rubans en matériau polymère sont formés à partir d'une feuille découpée ou de plusieurs monofilaments extrudés séparément, les rubans ou monofilaments sont étirés et les rubans ou monofilaments sont bobinés séparément ou en faisceaux de fibres pour former des bobines,
**caractérisé en ce que**
la rugosité de la surface des rubans ou des monofilaments est modifiée avant ou après le bobinage,
**en ce que** la surface des rubans ou des monofilaments est modifiée par un revêtement et/ou par une conversion de matière et
**en ce que** le revêtement et/ou la conversion de matière de la surface des rubans ou des monofilaments sont formés par un traitement au plasma.

2. Procédé selon la revendication 1, **caractérisé en ce que** le traitement au plasma de la surface des rubans ou des monofilaments s'effectue après l'étirage des rubans ou des monofilaments et de préférence avant le bobinage des rubans ou des monofilaments.

3. Procédé selon l'une des revendications 1 ou 2, **caractérisé en ce que** la surface est traitée en deux étapes, successivement sur la face inférieure et la face supérieure des rubans ou des monofilaments.

4. Procédé selon l'une des revendications précédentes, **caractérisé en ce que** les rubans ou monofilaments sont réalisés en le matériau polymère polyéthylène ou ses variantes ULDPE, MLDPE, LLDPE ou HDPE.

5. Ensemble de fabrication de fibres de gazon synthétique pour pelouse synthétique, présentant un dispositif d'extrusion (1) qui forme des rubans (7) ou des monofilaments (8) synthétiques, un dispositif d'étirage (2) qui étire les rubans (7) ou les monofilaments (8) et un dispositif de bobinage (5) qui bobine les rubans (7) ou les monofilaments (8) pour former plusieurs bobines,
**caractérisé en ce que**
un dispositif de traitement (3) est prévu et présente des moyens (3.3, 3.4, 3.5) de modification de la rugosité de la surface des rubans (7) ou des monofilaments (8) et
**en ce que** les moyens du dispositif de traitement (3) présentent au moins une électrode (3.3) à haute tension et un mélange de gaz par lesquels un traitement au plasma peut être exécuté sur la surface des rubans (7) ou des monofilaments (8).

6. Ensemble selon la revendication 5, **caractérisé en ce que** le dispositif de traitement (3) est disposé entre le dispositif d'étirage (2) et le dispositif d'enroulement (5).

7. Ensemble selon l'une des revendications 5 ou 6, **caractérisé en ce que** le dispositif de traitement (3) présente au moins deux postes (3.1, 3.2) par lesquels la face inférieure des rubans (7) ou des monofilaments (8) et la face supérieure des rubans (7) ou des monofilaments (8) peuvent être traitées séparément.
